# EUROPEAN PATENT SPECIFICATION

(11) **EP 2 454 776 B1**
(45) Date of publication and mention of the grant of the patent: **22.06.2016**
(21) Application number: 10743018.3
(22) Date of filing: 15.07.2010
(51) Int. Cl.: H01M 8/10, H01M 4/86, H01M 4/88

(54) **MICRO FUEL CELL SYSTEM AND CORRESPONDING MANUFACTURING METHOD**
MIKROBRENNSTOFFZELLENSYSTEM UND ENTSPRECHENDES HERSTELLUNGSVERFAHREN
SYSTÈME DE MICROPILE À COMBUSTIBLE ET PROCÉDÉ DE FABRICATION CORRESPONDANT

(30) Priority: 17.07.2009 IT MI20091270
(43) Date of publication of application: 23.05.2012
(73) Proprietor: Consiglio Nazionale Delle Ricerche, 00185 Roma (IT)
(72) Inventor: D'ARRIGO, Giuseppe, I-95030 Tremestieri Etneo (Catania) (IT); SPECCHIA, Stefania, I-10100 Torino (IT); ICARDI, Ugo, I-14053 Canelli (Asti) (IT); SPINELLA, Corrado Rosario, I-95039 Trecastagni (Catania) (IT); RIMINI, Emanuele, I-95021 Acicastello (Catania) (IT); SARACCO, Guido, I-10100 Torino (IT)
(74) Representative: Ferrari, Barbara
(86) International application number: PCT/EP2010/004308
(87) International publication number: WO 2011/006655

(56) References cited:
- EP-A1- 1 258 937
- EP-A1- 1 722 434
- WO-A2-2006/058357
- FR-A1- 2 846 797

## Description

### Field of application

The present invention relates to a micro fuel cell system.

More specifically, the invention relates to a system comprising at least an anode region and a cathode region being realised on a substrate as well as at least an active area for chemical reactions and an ionic exchange membrane for separating said active area.

The invention also relates to a manufacturing method of such a micro fuel cell system.

### Prior art

As it is well known, the always growing demand from the users of portable electronic devices has favoured, in the last years, the development of advanced technologies for producing electric energy which materialise more and more compact and reliable generator devices, being able to ensure a sufficient autonomy to portable devices using them.

In this field, the fuel cells have turn out to be the ideal devices for producing electric energy from renewable sources or fossil fuels. They are in fact clean and efficient systems for power producing with low emission levels. It is also envisaged that fuel cells would be able, in the near future, to substitute traditional systems for producing power or electric energy, in particular from the point of view of complying the requirements and targets of the Kyoto Protocol on the reduction of gas emissions, being responsible of increasing the well known and dangerous greenhouse effect.

In particular, it is well known that the energy requirements of electronic devices, which has rapidly increased in the last years, is strictly tied to the increased functionality of such portable devices. Clear examples of this more and more increasing power demand are for instance the cellular phones. It is in fact known that the age of a simple cellular phone quickly fades, yielding to a new cellular phone which integrates graphics and games, Internet service and instant messages.

It is also well known that it will be unlike that the batteries technology would tail the growing power needs of such portable devices. Realistic forecasts point out that battery improvements would not be able to suitably provide this kind of energy requirements.

In particular, the working time of the portable devices turns out to be time-limited depending on the energy amount that could be stored inside the batteries.

A fuel cell system would on the contrary allow the portable devices to work for a longer time without needing to be connected to an electric socket. Therefore, fuel cells are considered as one of the possible solutions in order to substitute the current battery as a main energy provision method in case of portable applications, at least at the theoretical level.

More in detail, fuel cells have recently interested in portable device applications, due to their specific energy density, having in particular a higher value with respect to the best rechargeable batteries now on the market, as well as due to the possibility of providing their refuelling in an instantaneous way and without needing an electric socket in order to connect to a power supply network.

As it is well known, a fuel cell essentially comprises an exchange system, in particular of the MEA (acronym from: "Membrane Electrode Assembly") type, being realised by means of a stack comprising an ionic exchange membrane which is comprised into a pair of plates or electrodes, acting as anode and cathode respectively, wherein a catalyst could be embedded. In particular, the membrane is permeable to ions but not to electrons and thus acts as an electric insulator for the electrodes, which are thus fully insulated one another. Substantially, the membrane realises a barrier which allows the ions transport between the anode and the cathode, whilst forcing electrons into an external conductive path towards the cathode, whereat they recombine with ions, thus providing electric power. A catalyst is always on the electrodes.

In fact, in very general way, a fuel cell is an electrochemical conversion device being able to produce electricity starting from a combustible (which is carried to touch the cell anode) and an oxidising (which touches the cathode instead) which react thanks to an electrolyte and a catalyst.

In particular, inside a fuel cell an electrochemical reaction occurs, which reaction breaks the combustible molecules into ions and produces electrons, these latter, flowing in an external circuit, providing an electric current which is proportional to the speed of the chemical reaction and which is usable to any purpose.

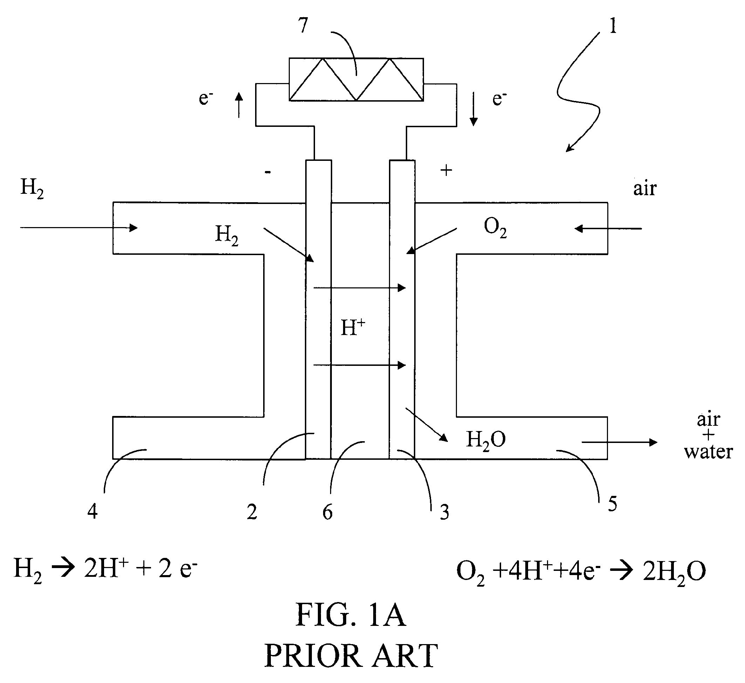

An example of such a fuel cell is schematically shown in Figure 1A, globally indicated with 1.

The fuel cell 1 comprises an anode 2 and a cathode 3, respectively connected to an inlet system 4 of a combustible (in the figure, hydrogen H₂) to an inlet system 5 of an oxidising (in the figure, the oxygen O₂ being comprised into the air), which also outlets exhaust products (in the figure, air and water H₂O), the systems being separated by a membrane 6.

The anode 2 and the cathode 3 are also connected to an external circuit 7 for transmitting the electrons (e⁻) and thus for producing electric current. In fact, the combustible (in the figure, hydrogen) is separated in correspondence with the anode 2 according to the reaction:

H₂ --> 2H⁺ + 2e⁻ (1)

The electrons (e⁻) flow into the external circuit 7 and the protons (H+) pass through the membrane 6, in order to both reach the cathode 3 wherein they recombine with the oxidising molecules (in the figure, oxygen) to form an exhaust product (in the figure, water) according to the reaction:

O₂ + 4H⁺ + 4e- --> 2H₂O (2)

An interesting aspect of the fuel cells is their higher intrinsic potential of energy density than batteries.

In case of portable device applications, the fuel cells should have small sizes in such a way to be integrated, from the volume point of view, into the devices themselves. However, miniaturising is not only a simple scaling of a macroscopic system. In reality, each fuel cell component should be newly designed focusing the miniaturising in order to provide a micro fuel cell system or micro-system. It is also convenient to increase the power and energy density of such a micro-system, whilst maintaining an equivalent reliability with respect to batteries. In case of portable applications, the micro fuel cells are in particular designed to provide an electric power between 0.5 W and 20 W.

The power density provided by a micro-system is in particular proportional to the sizes of the cell stack and to the cell active area. It is thus convenient, when designing such micro-systems, to take into account some boundary conditions, which include the working in environmental conditions, cathode air in a natural convection as well as some possible peripheral devices, such as pumps, valves and fans.

It is thus possible to adapt microstructure technology to micro fuel cells. The miniaturising impact should be thus derived from the scaling law.

The miniaturising advantages for micro fuel cells can be described as follows:
- surface effects enhance the reaction conditions and thus the fuel cell efficiency.
- the high pressure gap across the membrane diffusing layer enhances the combustible and oxidising diffusion on the membrane itself.
- surface effects and the advantageous reaction conditions enhance the water formation conditions and could lead to undesired electrode flooding situation.

The traditional micro fuel cell manufacturing method uses a hot pressing of the main components of the microcell itself, i.e. gas spreaders, electrodes and electrolyte. MEAs (Membrane and Electrode Assemblies) are mounted in a package, being usually realised by Perspex or polycarbonate, and then mechanically glued.

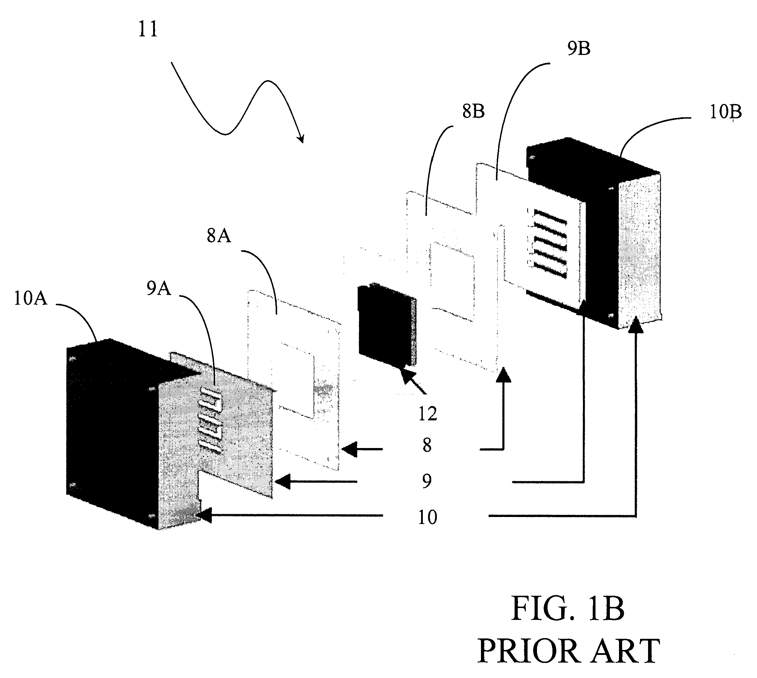

A microcell system is schematically shown in Figure 1B, with a blown perspective of each component. In particular, the system 11 comprises a MEA 12 being contained between respective gaskets 8A and 8B, respective bipolar plates 9A and 9B and respective fixtures 10A and 10B.

Essentially, the known manufacturing method being used to realise a microcell system is a same as the one used to assemble a typical electrolytic cell, which produces only few watts, the only difference being the different sizes.

Since the obtainable power density is proportional to the active surface of the MEAs, only a limited power can be produced by a miniaturised micro fuel cell.

Many reports relating to the micro fuel cell development by using this conventional assembling method are known, but different technological challenges should be really overcome before micro fuel cells become truly attractive for the market.

In particular, a micro fuel cell system should be small and compact to be used in the portable application field. Each application is different in terms of power, voltage and geometrical layout. A great effort for a future marketing is thus to be put into developing systems being able to reach an optimal balance between costs, efficiency, reliability and working life.

Micro fuel cell being built to exploit micrometric scale phenomenon should be even smaller and make use of a suitable volume in order to get the best heat and mass transfer.

Two approaches are currently taken into account:
- re-sizing of the micro fuel cell system by using a conventional mounting method, or
- re-designing each component of the system by using the MEMS technology (acronym from: "Micro-Electro-Mechanical-System").

The successful application of the MEMS technology, being traditionally used in the semiconductor industry, for different systems such as internal sensors, biomedical sensors and optical systems, make it a promising candidate for miniaturising also micro fuel cell systems. Such a technology has been particularly used for systems of the PEMFC type (acronym from: "Proton Exchange Membrane Fuel Cell") and of the DMFC type (acronym from: "Direct-Methanol-Fuel-Cell").

In particular, MEMS technology is able to control the precision of the combustible, air and water fluxes towards the electrodes and could enhance the current and power density in a fuel cell having small sizes, or a microcell.

This capacity of the MEMS technology for miniaturising a micro fuel cell system has aroused searchers and industries interests. Besides the drastic size reduction, the use of MEMS technologies for manufacturing micro fuel cells generally relates a change into the used materials for building the microcell, such as the silicon wafer in place of the conventional graphite for the bipolar plates, as well as the wide range of materials being used in the semiconductor integrated circuit field, such as silicon oxides, carbides and nitrides as well as metals like aluminium and titanium.

The main advantage of the MEMS technology is that it allows to produce a bipolar plate being smaller in a more precise manner, besides the possibility of having a microcell production at industrial level.

Manufacturing methods of microcell systems using the MEMS technology are known for instance from the US Patents No. US 6,969,664 issued on November 29, 2005 and entitled: "Micro silicon fuel cell, method of fabrication and self-powered semiconductor device integrating a micro fuel cell", to D'Arrigo Giuseppe, Coffa Salvatore, Spinella Rosario, No. US 7,063,798 issued on June, 20 2006 and entitled: "Method for realizing microchannels in an integrated structure" to D'Arrigo Giuseppe, Spinella Rosario, Arena Giuseppe, Lorenti Simona and the US Patent Application published under No. US 2006/0255464 on November 16, 2006 and entitled: "Fuel cell formed in a single layer of monocrystalline silicon and fabrication process" to D'Arrigo Giuseppe, Coffa Salvatore.

It is worth underline that traditional micromanufacturing methods applied to silicon micro fuel cells whilst offering important advantages, such as reducing each component to the micrometric scale by using the photoexposure method, also show different drawbacks and limits, and in particular:
- the silicon substrate is fragile and thus it is not suitable to be used for a conventional hot pressing method;
- the silicon substrate and the microsystems manufacturing turn out to be actually too much expensive for a mass production.

The technical problem of the present invention is that of providing a micro fuel cell system and a corresponding manufacturing method having structural and functional characteristics which allow to overcome the limits and drawbacks which still affect the methods realised according to the prior art.

### Summary of the invention

The solution idea underlying the present invention according to claim 1, is that of realising the micro fuel cell components in such a way they are co-planar by using MEMS micromanufacturing techniques to reduce the sizes of each component of a microcell system in combination with low cost polymeric material substrates instead of traditional silicon substrates.

On the basis of such solution idea the technical problem is solved by a micro fuel cell system of the type which comprises at least an anode region and a cathode region being realised on a substrate as well as at least an active area for chemical reactions and an ionic exchange membrane for separating said active area characterized in that said anode and cathode regions, said active area and said ionic exchange membrane are realised on a same planar surface being made by said substrate in order to form a single multifunctional bipolar plate.

Advantageously, such a planar structure can be realised in such a way to have a reduced size and a low weight.

The substrate is realised in a flexible or rigid laminated of a material being used for realising the printed circuit boards, preferably chosen between silicon, graphite, plastic.

Advantageously, the use of polymeric material gives many freedom degrees when realising the system.

According to another aspect of the invention, the active area comprises respective surface amplification structures having a column configuration in correspondence with said anode and cathode regions.

Advantageously, such surface amplification structures allow to improve the efficiency of the system as a whole.

According to another aspect of the invention, the surface amplification structures can be covered by a respective catalyst material layer having a substantially fingered structure and are separated by said ionic exchange membrane.

Advantageously, the metallic catalyst dispersion can be directly made at the surface amplification structure borders.

According to another aspect of the invention, the ionic exchange membrane also comprises respective portions covering said catalyst material layers and having a same fingered structure.

Advantageously, this configuration allows to reduce the characteristic length of the system thus making the same less sensible to the ohmic impedance effects.

According to another aspect of the invention, the anode and cathode regions are equipped with respective current collectors being realised on said substrate.

According to this aspect of the invention, the current collectors are formed by a conductive material film being covered by a catalyst layer.

Advantageously, these collectors are directly deposited on the lower portion of the region wherein there are the columns of the surface amplification structures and the current should not need to be extracted from significantly big metal lines.

According to another aspect of the invention, the anode and cathode regions are connected to respective flux distribution structures, in particular microchannels, being realised on said substrate for separately supplying combustible and oxidising fluxes.

According to another aspect of the invention, the system could further comprise a covering layer of said microchannels for bordering the combustible and oxidising fluxes.

The problem is also solved according to claim 6, by a manufacturing method of a micro fuel cell system of the type which comprises at least an anode region and a cathode region being realised on a substrate as well as at least an active area for chemical reactions and an ionic exchange membrane for separating said active area, the method comprising the steps of:
- realising said substrate; and
- realising said anode and cathode regions, said active area and said ionic exchange membrane in a coplanar way on said substrate to form a single multifunctional bipolar plate.

According to another aspect of the invention, the step of realising said anode and cathode regions, said active area and said ionic exchange membrane in a coplanar way on said substrate further comprises the steps of:
- depositing on said substrate a film of conductive material;
- depositing a photoresist layer on said film of conductive material; and
- carrying out a photoexposure being able to separate said film of conductive material into a first portion and a second portion, being able to form respective seed-structures for surface amplification structures of said anode and cathode regions of said micro fuel cell system.

According to another aspect of the invention, the step of realising said anode and cathode regions, said active area and said ionic exchange membrane in a coplanar way on said substrate further comprises the steps of:
- etching said photoresist layer and exposing said first and second portions of said film of conductive material;
- depositing a further photoresist layer covering said first and second portions of said film of conductive material and a portion of said substrate having been left exposed between them; and
- carrying out a photoexposure being able to realise a plurality of openings in said further photoresist layer in correspondence of columns of surface amplification structures of said anode and cathode regions.

According to another aspect of the invention, the step of realising said anode and cathode regions, said active area e and said ionic exchange membrane in a coplanar way on said substrate further comprises the steps of:
- depositing a layer of conductive material, thus forming said columns of said surface amplification structures of said anode and cathode regions; and
- etching said further photoresist layer thus exposing said surface amplification structures of said anode and cathode regions.

According to another aspect of the invention, the step of realising said anode and cathode regions, said active area and said ionic exchange membrane in a coplanar way on said substrate further comprises the step of:
- depositing a catalyst material layer, thus forming fingered structures being alternated over said surface amplification structures of said anode and cathode regions.

Advantageously, these fingered structures being deposited on the surface amplification structures favour the catalysing surface amplification.

According to another aspect of the invention, the step of realising said anode and cathode regions, said active area and said ionic exchange membrane in a coplanar way on said substrate further comprises the steps of:
- depositing a layer of ionic exchange material over the whole system, and
- carrying out a selective etching of said layer of ionic exchange material, thus forming said ionic exchange membrane, as well as portions covering said surface amplification structures of said anode and cathode regions.

Advantageously, the method according to the invention is essentially based on photoexposure and electroformation steps being normally used both in the microelectronic field and specifically in the MEMS technology, having obvious advantages in terms of simplification and safety of the results of such a method for realising a micro fuel cell system according to the invention. In particular, the use of etching techniques being supported by photoexposing allows to reduce the distance between the anode and cathode regions as from the designing phase of the whole structure, while conventionally these regions are realised by means of hot pressing techniques of the catalyst diffusing layer, which are not a priori controllable.

According to another aspect of the invention, the step of realising said anode and cathode regions, said active area and said ionic exchange membrane in a coplanar way on said substrate further comprises the step of:
- depositing nanostructured materials having a wide surface over said surface amplification structures of said anode and cathode regions.

According to another aspect of the invention, the step of depositing said layer of ionic exchange material comprises a step chosen between: spray coating, spinning o laminating.

According to another aspect of the invention, the step of selective etching of said layer of ionic exchange material comprises a step of separating microchannels of said micro cell system and put into contact said anode and cathode regions.

According to another aspect of the invention, the step of depositing said film of conductive material comprises a step of spraying said film of conductive material, preferably gold, on said substrate.

According to another aspect of the invention, the step of depositing said layer of conductive material and forming said columns of said surface amplification structures comprises a step of gold plating.

According to another aspect of the invention, the step of etching said further photoresist layer comprises a step of stripping.

According to another aspect of the invention, the step of depositing said layer of catalyst material comprises a step of plating.

According to another aspect of the invention, the method further comprises a moulding step wherein a negative structure is transferred by means of pressure moulding techniques on a polymeric layer for realising surface amplification structures having columns of said anode and cathode regions of said micro fuel cell system.

According to this aspect of the invention, the moulding step further realises microchannels of said micro cell system.

Further characteristics and advantages of the micro fuel cell system and of the corresponding manufacturing method according to the invention will be apparent from the following description of an embodiment thereof given by way of indicative and non limiting example with reference to the annexed drawings.

### Brief description of the drawings

In such drawings:
Figure 1A schematically shows a micro fuel cell realised according to the prior art;
Figure 1B schematically shows a micro fuel cell system realised according to the prior art;
Figure 2A schematically shows a micro fuel cell system realised according to the invention;
Figure 2B schematically shows a detail of the system of Figure 2A;
Figure 3 schematically shows a section of the micro fuel cell system realised according to the invention; and
Figures 4A-4M schematically show a micro fuel cell system in different steps of the manufacturing method according to the invention.

### Detailed description

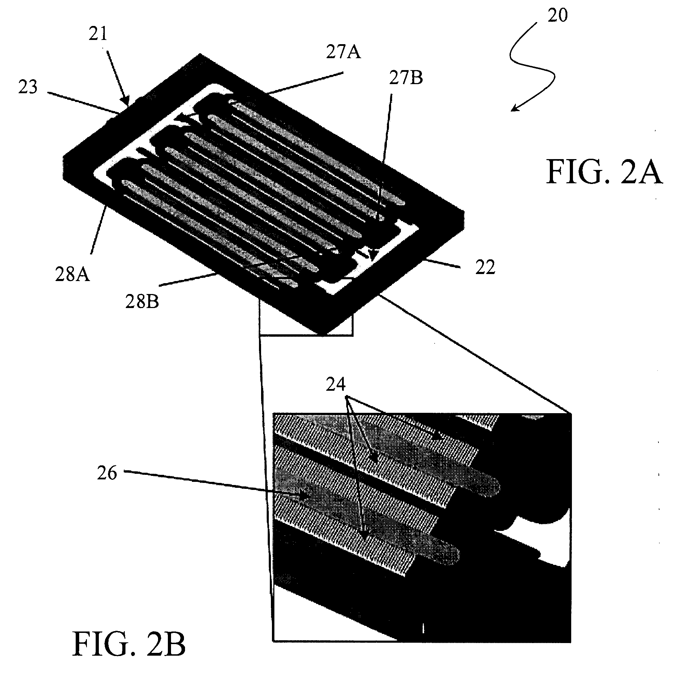

With reference to such figures, and in particular to Figure 2A, a micro fuel cell system being realised according to the invention is globally indicated with 20.

It is worth noting that, in the figures, the different elements have been schematically illustrated and that their shape can be changed according to the desired application.

Advantageously according to the invention, the system 20 essentially comprises a single multifunctional bipolar plate being realised starting from a substrate 21 of a polymeric material whereon a planar stack of micro fuel cells is integrated along with other active elements of the system.

In particular, the system 20 comprises at least an anode region 22 and a cathode region 23 being realised on said substrate 21 as well as at least one active area 24 for chemical reactions and an ionic exchange membrane 26. Advantageously according to the invention, the anode and cathode regions, 22 and 23, the active area 24 and the membrane 26 are realised on a same planar surface, in particular the substrate 21.

Moreover, the anode and cathode regions, 22 and 23, are equipped with respective current collectors, 27A and 27B, being realised on the substrate 21 and they are also connected to respective flux distribution structures, in particular microchannels 28A and 28B, the latter being also realised on the substrate 21.

In particular, combustible and oxidising are supplied through the microchannels 28A and 28B which are insulated and separated from the active area 24, being in turn suitably located in correspondence with two sides of the membrane 26, as shown in greater detail in Figure 2B.

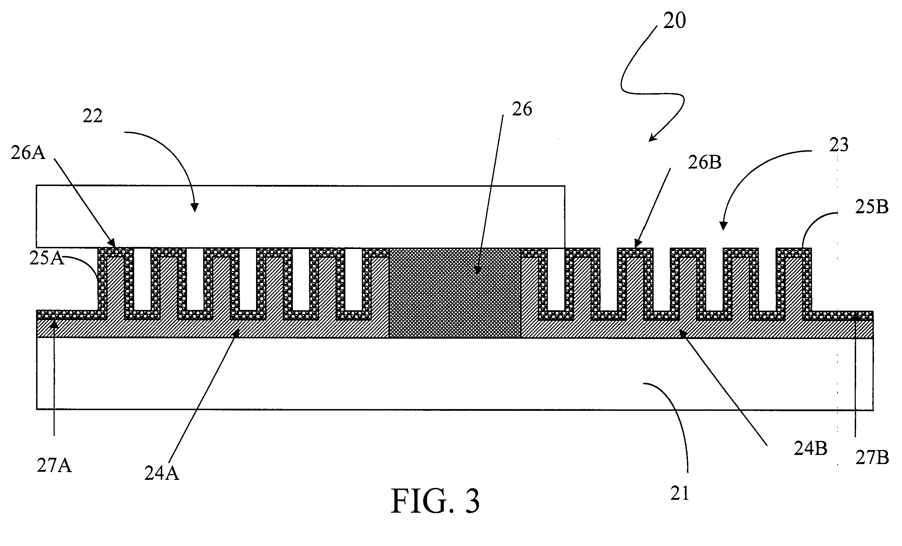

As will be cleared in the following description with reference to the manufacturing method of the micro fuel cell system 20, the active area 24 is suitably realised by means of a surface amplification structure, having a column configuration of the type being shown in Figure 3.

In particular, the anode and cathode regions, 22 and 23, comprise respective structures 24A and 24B having a column configuration and being suitably covered by a respective catalyst material layer, 25A and 25B, having a fingered structure and being separated from the membrane 26. Lateral portions of a conductive material film being covered by the catalyst layer 25 form respective current collectors 27A and 27B.

Advantageously according to the invention, as will be cleared from the following description, the structures 24A and 24B having a column configuration of the anode and cathode regions, 22 and 23, have a high form factor, i.e. they have a base having small sizes and a high height to favour the catalysis surface amplification.

In particular, the anode and cathode regions, 22 and 23, are realised on a same silicon plate, the substrate 21, and form an alternated fingered structure having a high form factor. On such a plate are also realised the microchannels for the inlet of the combustible and of the oxidising.

Further advantageously according to the invention, the membrane 26 also comprises respective portions 26A and 26B which cover the catalyst material layers 25A and 25B and have a same fingered structure.

Finally, the microcell system 20 can also comprise a layer covering the microchannels 28A, 28B for bordering the combustible and oxidising fluxes.

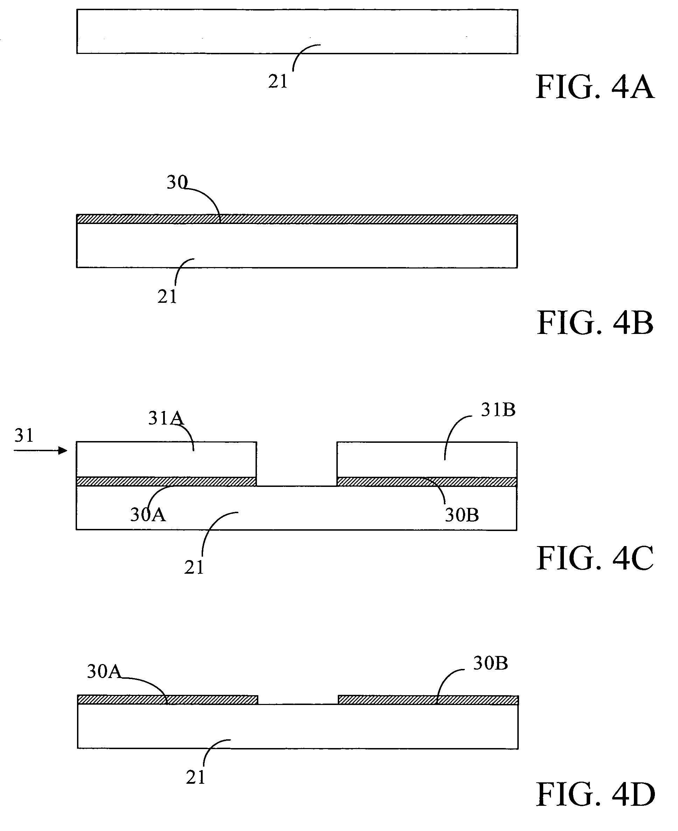

The invention also relates to a manufacturing method of a micro fuel system 20, the method being described with reference to Figures 4A-4M.

It is worth nothing that the process steps being described in the following lines do not form a complete microstructures manufacturing process. The present invention could be reduced into practice along with micromanufacturing techniques currently used in the field, and only commonly used steps are herewith described, being the needed ones to understand the present invention.

Moreover, the figures, which show schematic views of portions of a microstructure during its manufacturing, are not drawn in scale, being instead drawn in such a way to emphasise the invention main features.

According to its most general form, the manufacturing method of a micro fuel cell system 20, being of the type which comprises at least an anode region 22 and a cathode region 23 being realised on a substrate 21 as well as at least one active area 24 for chemical reactions and an ionic exchange membrane 26 for separating said active area 24, comprises the steps of:
- realising the substrate 21; and
- realising the anode and cathode regions, 22 and 23, the active area 24 and the ionic exchange membrane 26 in a coplanar way on the substrate 21 to form a single multifunctional bipolar plate.

In particular, such a step of realising the anode and cathode regions, 22 and 23, the active area 24 and the ionic exchange membrane further comprises the steps of:
- realising the substrate 21, as schematically illustrated in Figure 4A. In particular, it is possible to realise such a substrate 21 with a flexible or rigid laminate material of the type being used, for instance, for realising Printed Circuit Board or PCB, such as silicon, graphite, plastic, to name few, or more in particular, a polymeric material such as Polyamide (Kapton) o Polyethylenaftalate (PEN);
- depositing on said substrate 21 a conductive material film 30, in particular a gold sputtered film, as schematically illustrated in Figure 4B. In particular, the conductive material film 30 is used as a seed layer for realising surface amplification structures of the anode and cathode regions, 22 and 23, as will be cleared from the following description;
- depositing a photoresist layer 31 on the conductive material film 30. In particular, this step of depositing the photoresist layer 31 is carried out in dry.

The method then comprises a first photoexposure step being able to separate the conductive material film 30 into a first portion 30A and a second portion 30B, suitable to form respective seed-structures for the surface amplification structures of the anode and cathode regions, 22 and 23, being covered by respective portions 31A and 31B of the photoresist layer 31, as shown in Figure 4C, these latter being then etched away, as shown in Figure 4D. The anode region 22 and cathode region 23 are thus separated where the respective surface amplification structures will be realised.

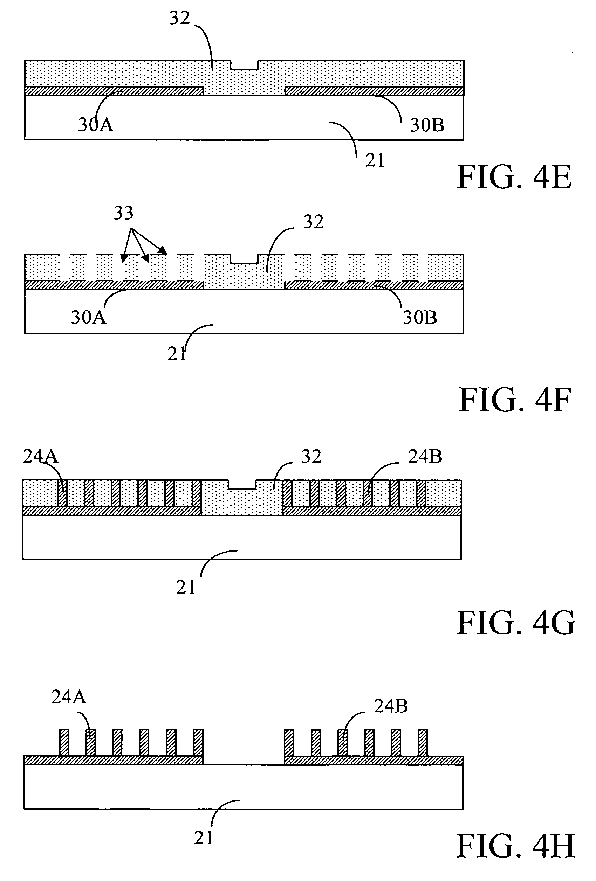

The method further comprises a step of depositing a further photoresist layer 32 covering the first and second portions, 30A and 30B of the conductive material film and a portion of the substrate 21 having been left exposed between them, as shown in Figure 4E, a second step of photoexposure being able to realise a plurality of openings 33 in said further photoresist layer 32 in correspondence of columns of surface amplification structures of the anode and cathode regions, 22 and 23, as shown in Figure 4F and a step of depositing, for instance by plating, a layer of conductive material, in particular gold, thus forming the columns of the surface amplification structures 24A e 24B, as shown in Figure 4G.

The method then comprises a step of etching the further photoresist layer 32, for instance by stripping, thus exposing the surface amplification structures 24A and 24B, as illustrated in Figure 4H.

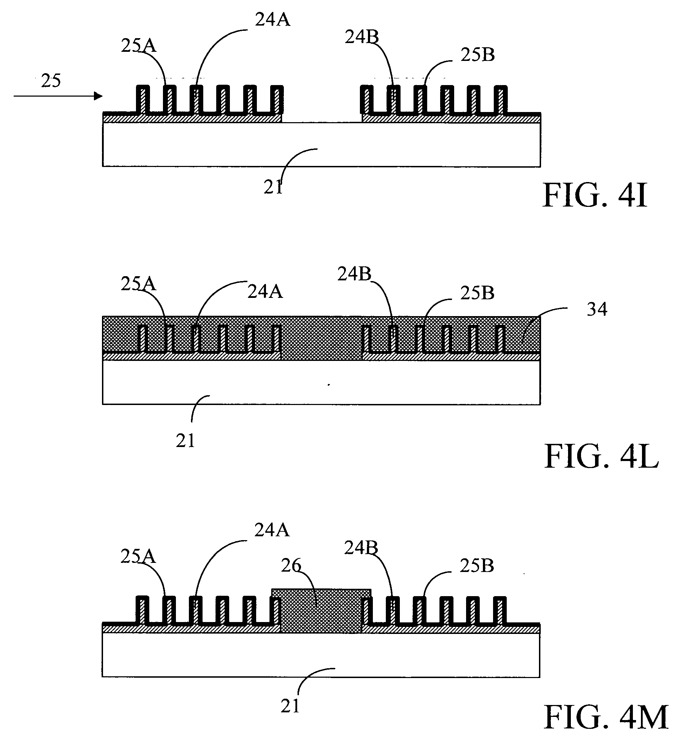

Advantageously according to the invention, the method further comprises a step of depositing a catalyst material layer 25, in particular by plating, thus forming fingered structures 25A and 25B being alternated over the surface amplification structures 24A and 24B, as illustrated in Figure 4I.

According to a particular embodiment, the method further comprises a step of depositing nanostructured materials having a wide surface over the surface amplification structures 24A and 24B of the anode and cathode regions, 22 and 23, such as nanoclusters o nanopipes, to name few.

It is also possible to realise the surface amplification structures 24A a 24B with columns and also the microchannels 28A and 28B by using moulding techniques wherein a negative structure is replicated by pressure moulding techniques on a polymeric layer to realise three-dimensional fluidic structures with columns.

Finally, the method comprises a step of depositing an ionic exchange material layer 34 on the whole system 20, as shown in Figure 4L, and its subsequent selective etching thus forming the membrane 26 separating the anode and cathode regions, 22 and 23, as well as the portions 26A and 26B covering the surface amplification structures 24A and 24B, as illustrated in Figure 4M.

In particular, this step of depositing the ionic exchange material layer 34 could comprises a step chosen between: spray coating, spinning or laminating. The subsequent selective etching step of the ionic exchange material layer 34 allows to separate the microchannels 28A and 28B of the microcell system 20 and puts into contact the anode and cathode regions, 22 and 23. In particular, it should be noted that the materials of the resist type being used in the printed or flexible circuits field are different from the ones used in the semiconductor field and they are preferably deposited by spinning. More in particular, photoresist films are used, being made adhere to the substrate through lamination techniques.

Furthermore, the method could comprise a final step of closing the structure being realised by depositing a covering layer suitable to border the combustible and oxidising fluxes. In particular, when the microcell system 20 is of the air breathing type (i.e. it uses the oxygen directly from the atmosphere), this covering layer would not be used for an air or oxygen channel, in this case being not needed.

It is worth noting that the method according to the invention is essentially based on photoexposure and electroforming steps which are commonly used both in the microelectronic field and specifically in MEMS technology, thus having clear advantages with reference to the simplification and reliability of realisation of the micro fuel cell system 20 according to the invention. Moreover, the column structures of the surface amplification structures 24A and 24B provide for an enhancement of the superficial reaction.

For sake of example, it is possible to consider a surface being covered by columns for almost 10000 micron squared (100 x 100), thus obtaining a real reaction surface for the columns (10 micron of diameter, 10 micron of distance between columns, and an height of 20 micron) equal to almost 37500 micron squared. It is thus clear that the surface amplification structures 24A and 24B having a column configuration allow to obtain an increase of the active surface equal to almost 3.75 times.

Furthermore, it should be noted that the final thickness of the system 20 is given by the sum of the substrate thickness (approximately 100 micron of Kapton or PEN), and the column thickness and also the one of the covering polymeric layer, for a total thickness of less than 1 millimetre.

Advantageously, the system 20 being realised by the method according to the invention comprises a single multifunctional bipolar plate whereon a micro fuel cell planar stack is integrated, the cell being constituted by a polymeric material, which is used as a substrate also for the other system active elements, being in turn realised by using standard photoexposure processes, applied to laminated film on the substrate, in particular dry.

The system 20 according to the invention shows several advantages, such as:
- it is a planar structure being essentially formed by a micro fuel cell multistack, which integrates a given number of anodes and cathodes on the surface of a same polymeric material, each element being manufactured by a low cost technique. The use of polymeric material allows a greater number of freedom degrees when realising the system 20. In particular, inside the fingered structure, being realised according to the invention, each element being constituted by anode, , membrane and cathode is actually a microcell, which is however placed in parallel or in series with all others according to their interconnection.
- the needed combustible and oxidising are supplied to insulated microchannels and separated by high reaction surface columns being located in correspondence with two sides of the photoresist membrane. In particular, both combustible and oxidising fluxes comprises the reaction products, the physical bordering preventing a direct contact between the fluxes. In particular, inside the fingered structure, the gas which reaches the anode does contact the one going towards the cathode but through the membrane in the ion form being the microchannel structure closed.
- the characteristic length of the system 20 is the distance that ions should cover between two electrodes and it is really short being the sizes of the membrane 26 suitably controlled through the photoexposure process. This makes the system 20 as a whole less sensible to the ohmic impedance effects.

- the efficiency of the current collects 27A e 27B is high, since the catalyst layers are directly supported by the conductive material film 30. In addition, these collectors are directly deposited on the lower portion of the region wherein the columns of the surface amplification structures 24A and 24B are placed and the current should be thus not extracted from especially wide metal lines.
- the dispersion of the metallic catalyst is directly performed on both sides of the surface amplification structures 24A and 24B having a column configuration.

Moreover, it should be noted that the system 20 according to the invention can be used for hydrogen, methanol or other combustible types, substantially providing a multifuel system.

In conclusion, the micro fuel cell system 20 according to the invention has the important advantages of being a planar structure having reduced sizes and a low weight as well as a high efficiency thanks to the surface amplification structures 24A and 24B having a column configuration.

The system 20 according to the invention thus allows to provide an electric power source being flexible and having an enhanced active surface and a reduced total weight. This system turns out also to have a competitive cost, a compact layer and an integrated design and it is able to work with low temperatures (30-60 °C) being thus suitable to substitute the batteries which are commonly used to supply portable devices.

Obviously, a technician of the field, aiming at meeting incidental and specific needs, will bring several modifications to the above described method, all within the scope of protection of the invention as defined by the following claims.

## Claims

1. Micro fuel cell system (20) of the type which comprises at least an anode region (22) and a cathode region (23) being realised on a substrate (21) as well as at least an active area (24) for chemical reactions and an ionic exchange membrane (26) for separating said active area (24) **characterized in that** said anode and cathode regions (22, 23), said active area (24) and said ionic exchange membrane (26) are realised on a same planar surface being made by said substrate (21) in order to form a single multifunctional bipolar plate, said substrate (21) being realised in a flexible or rigid laminated of a material being used for realising the printed circuit boards, preferably chosen between silicon, graphite, plastic.

2. System (20) according to claim 1, **characterized in that** said active area (24) comprises respective surface amplification structures (24A, 24B) having a column configuration in correspondence with said anode and cathode regions (22, 23) and being covered by a respective catalyst material layer (25A, 25B) having a substantially interdigited structure and being separated by said ionic exchange membrane (26).

3. System (20) according to claim 2, **characterized in that** said ionic exchange membrane (26) also comprises respective portions (26A, 26B) covering said catalyst material layers (25A, 25B) and having a same interdigited structure.

4. System (20) according to claim 3, **characterized in that** said anode and cathode regions (22, 23) are equipped with respective current collectors (27A, 27B) being realised in said substrate (21), formed by a conductive material film being covered by a catalyst layer (25)and connected to respective flux distribution structures, in particular microchannels (28A, 28B), which are realised on said substrate (21) for separately supplying combustible and oxidising fluxes.

5. System (20) according to claim 4, **characterized in that** it further comprises a covering layer of said microchannels (28A, 28B) for bordering the combustible and oxidising fluxes.

6. Manufacturing method of a micro fuel cell system (20) of the type which comprises at least an anode region (22) and a cathode region (23) being realised on a substrate (21) as well as at least an active area (24) for chemical reactions and an ionic exchange membrane (26) for separating said active area (24), the method comprising the steps of:
- realising said substrate (21) by using a flexible or rigid laminated of a material being used for realising the printed circuit boards, preferably chosen between silicon, graphite, plastic; and
- realising said anode and cathode regions (22, 23), said active area (24) and said ionic exchange membrane (26) in a coplanar way on said substrate (21) to form a single multifunctional bipolar plate.

7. Method according to claim 6, wherein said step of realising said anode and cathode regions (22, 23), said active area (24) and said ionic exchange membrane (26) in a coplanar way on said substrate (21) further comprises the steps of:
- depositing on said substrate (21) a conductive material film (30);
- depositing a photoresist layer (31) on said conductive material film (30); and
- carrying out a photoexposure being able to separate said conductive material film (30) into a first portion and a second portion (30A, 30B), suitable to form respective seed-structures for surface amplification structures (24A, 24B) of said anode and cathode regions (22, 23) of said micro fuel cell system (20).

8. Method according to claim 7, wherein said step of realising said anode and cathode regions (22, 23), said active area (24) and said ionic exchange membrane (26) in a coplanar way on said substrate (21) further comprises the steps of:
- etching said photoresist layer (31) and exposing said first and second portions (30A, 30B) of said conductive material film (30);
- depositing a further photoresist layer (32) covering said first and second portions (30A, 30B) of said conductive material film (30) and a portion of said substrate (21) having been left exposed between them;
- carrying out a photoexposure being able to realise a plurality of openings (33) in said further photoresist layer (32) in correspondence of columns of surface amplification structures (24A, 24B) of said anode and cathode regions (22, 23);
- depositing a layer of conductive material, thus forming said columns of said surface amplification structures (24A, 24B) of said anode and cathode regions (22, 23); and
- etching said further photoresist layer (32) thus exposing said surface amplification structures (24A, 24B) of said anode and cathode regions (22, 23).

9. Method according to claim 8, wherein said step of realising said anode and cathode regions (22, 23), said active area (24) and said ionic exchange membrane (26) in a coplanar way on said substrate (21) further comprises the steps of:
- depositing a catalyst material layer (25), thus forming interdigited structures (25A, 25B) being alternated over said surface amplification structures (24A, 24B) of said anode and cathode regions (22, 23);
- depositing a layer of ionic exchange material (34) over the whole system (20), and
- carrying out a selective etching of said layer of ionic exchange material (34), thus forming said ionic exchange membrane (26), as well as portions (26A, 26B) covering said surface amplification structures (24A, 24B) of said anode and cathode regions (22, 23) and having a same interdigited structure of said interdigited structures (25A, 25B).

10. Method according to claim 9, wherein said step of realising said anode and cathode regions (22, 23), said active area (24) and said ionic exchange membrane (26) in a coplanar way on said substrate (21) further comprises the step of:
- depositing nanostructured materials having a wide surface over said surface amplification structures (24A, 24B) of said anode and cathode regions (22, 23).

11. Method according to claim 9, wherein said step of depositing said layer of ionic exchange material (34) comprises a step chosen between: spray coating, spinning or laminating.

12. Method according to claim 9, wherein said step of selective etching of said layer of ionic exchange material (34) comprises a step of separating microchannels (28A, 28B) of said micro cell system (20) and put into contact said anode and cathode regions (22, 23).

13. Method according to claim 7, wherein said step of depositing said conductive material film (30) comprises a step of spraying said conductive material film (30), preferably gold, on said substrate (21).

14. Method according to claim 8, wherein said step of depositing said conductive material film and forming said columns of said surface amplification structures (24A, 24B) comprises a step of gold plating.

15. Method according to claim 6, further comprising a moulding step wherein a negative structure is transferred by means of pressure moulding techniques on a polymeric layer as a substrate (21) of the micro fuel cell system for realising surface amplification structures (24A, 24B) having columns of said anode and cathode regions (22, 23) of said micro fuel cell system (20), said moulding step further realising microchannels (28A, 28B) of said micro fuel cell system (20).

## Patentansprüche

1. Mikrobrennstoffzellensystem (20) von dem Typ, der zumindest eine Anodenregion (22) und eine Kathodenregion (23) umfasst, die auf einem Substrat (21) ausgebildet sind, wie auch zumindest eine aktive Fläche (24) für chemische Reaktionen und eine Ionenaustauschmembran (26) zum Trennen der aktiven Fläche (24), **dadurch gekennzeichnet, dass** die Anoden- und Kathodenregionen (22, 23), die aktive Fläche (24) und die Ionenaustauschmembran (26) auf einer gleichen ebenen Oberfläche ausgebildet sind, die durch das Substrat (21) gebildet ist, um eine einzige multifunktionelle bipolare Platte zu bilden, wobei das Substrat (21) in einem flexiblen oder starren Laminat aus einem Material ausgebildet ist, das zur Ausführung gedruckter Leiterplatten verwendet wird, vorzugsweise ausgewählt aus Silizium, Grafit, Kunststoff.

2. System (20) nach Anspruch 1, **dadurch gekennzeichnet, dass** die aktive Fläche (24) entsprechende Oberflächenverstärkungsstrukturen (24A, 24B) mit einer Spaltenkonfiguration in Entsprechung mit den Anoden- und Kathodenregionen (22, 23) umfasst und von einer entsprechenden Katalysatormaterialschicht (25A, 25B) mit einer im Wesentlichen ineinandergreifenden Struktur und getrennt durch die Ionenaustauschmembran (26) bedeckt ist.

3. System (20) nach Anspruch 2, **dadurch gekennzeichnet, dass** die Ionenaustauschmembran (26) auch entsprechende Abschnitte (26A, 26B) umfasst, welche die Katalysatormaterialschichten (25A, 25B) bedecken und eine gleiche ineinandergreifende Struktur haben.

4. System (20) nach Anspruch 3, **dadurch gekennzeichnet, dass** die Anoden- und Kathodenregionen (22, 23) mit entsprechenden Stromkollektoren (27A, 27B) ausgestattet sind, die in dem Substrat (21) ausgebildet sind, die durch einen leitenden Materialfilm gebildet sind, der von einer Katalysatorschicht (25) bedeckt und mit entsprechenden Flussmittelverteilerstrukturen verbunden ist, insbesondere Mikrokanälen (28A, 28B), die für ein separates Zuleiten von brennbaren und oxidierenden Flussmitteln auf dem Substrat (21) ausgebildet sind.

5. System (20) nach Anspruch 4, **dadurch gekennzeichnet, dass** es ferner eine Deckschicht der Mikrokanäle (28A, 28B) zur Eingrenzung der brennbaren und oxidierenden Flussmittel umfasst.

6. Verfahren zur Herstellung von einem Mikrobrennstoffzellensystem (20) von dem Typ, der zumindest eine Anodenregion (22) und eine Kathodenregion (23) umfasst, die auf einem Substrat (21) ausgebildet sind, wie auch zumindest eine aktive Fläche (24) für chemische Reaktionen und eine Ionenaustauschmembran (26) zum Trennen der aktiven Fläche (24), wobei das Verfahren die Schritte umfasst:
- Ausbilden des Substrats (21) unter Verwendung eines flexiblen oder starren Laminats aus einem Material, das zur Ausbildung gedruckter Leiterplatten verwendet wird, vorzugsweise ausgewählt aus Silizium, Grafit, Kunststoff; und
- Ausbilden der Anoden- und Kathodenregionen (22, 23), der aktiven Fläche (24) und der Ionenaustauschmembran (26) in komplanarer Weise auf dem Substrat (21), um eine einzige multifunktionelle bipolare Platte zu bilden.

7. Verfahren nach Anspruch 6, wobei der Schritt des Ausbildens der Anoden- und Kathodenregionen (22, 23), der aktiven Fläche (24) und der Ionenaustauschmembran (26) in komplanarer Weise auf dem Substrat (21) des Weiteren die Schritte umfasst:
- Auftragen eines leitenden Materialfilms (30) auf dem Substrat (21);
- Auftragen einer Fotoresistschicht (31) auf dem leitenden Materialfilm (30); und
- Ausführen einer Belichtung, die imstande ist, den leitenden Materialfilm (30) in einen ersten Abschnitt und einen zweiten Abschnitt (30A, 30B) zu trennen, die geeignet sind, entsprechende Saatstrukturen für Oberflächenverstärkungsstrukturen (24A, 24B) der Anoden- und Kathodenregionen (22, 23) des Mikrobrennstoffzellensystems (20) zu bilden.

8. Verfahren nach Anspruch 7, wobei der Schritt des Ausbildens der Anoden- und Kathodenregionen (22, 23), der aktiven Fläche (24) und der Ionenaustauschmembran (26) in komplanarer Weise auf dem Substrat (21) des Weiteren die Schritte umfasst:
- Ätzen der Fotoresistschicht (31) und Freilegen der ersten und zweiten Abschnitte (30A, 30B) des leitenden Materialfilms (30);
- Auftragen einer weiteren Fotoresistschicht (32), die die ersten und zweiten Abschnitte (30A, 30B) des leitenden Materialfilms (30) und einen Abschnitt des Substrats (21), der zwischen diesen frei geblieben ist, bedeckt;
- Ausführen einer Belichtung, die imstande ist, mehrere Öffnungen (33) in der weiteren Fotoresistschicht (32) in Entsprechung mit Spalten von Oberflächenverstärkungsstrukturen (24A, 24B) der Anoden- und Kathodenregionen (22, 23) auszuführen;
- Auftragen einer Schicht aus leitendem Material, wodurch die Spalten der Oberflächenverstärkungsstrukturen (24A, 24B) der Anoden- und Kathodenregionen (22, 23) gebildet werden; und
- Ätzen der weiteren Fotoresistschicht (32), wodurch die Oberflächenverstärkungsstrukturen (24A, 24B) der Anoden- und Kathodenregionen (22, 23) freigelegt werden.

9. Verfahren nach Anspruch 8, wobei der Schritt des Ausbildens der Anoden- und Kathodenregionen (22, 23), der aktiven Fläche (24) und der Ionenaustauschmembran (26) in komplanarer Weise auf dem Substrat (21) des Weiteren die Schritte umfasst:
- Auftragen einer Katalysatormaterialschicht (25), wodurch ineinandergreifende Strukturen (25A, 25B) gebildet werden, die sich über die Oberflächenverstärkungsstrukturen (24A, 24B) der Anoden- und Kathodenregionen (22, 23) abwechseln;
- Auftragen einer Schicht aus Ionenaustauschmaterial (34) über dem gesamten System (20) und
- Durchführen eines selektiven Ätzens der Schicht aus Ionenaustauschmaterial (34), wodurch die Ionenaustauschmembran (26) wie auch Abschnitte (26A, 26B) gebildet werden, die die Oberflächenverstärkungsstrukturen (24A, 24B) der Anoden- und Kathodenregionen (22, 23) bedecken und eine gleiche ineinandergreifende Struktur wie die ineinandergreifenden Strukturen (25A, 25B) haben.

10. Verfahren nach Anspruch 9, wobei der Schritt des Ausbildens der Anoden- und Kathodenregionen (22, 23), der aktiven Fläche (24) und der Ionenaustauschmembran (26) in komplanarer Weise auf dem Substrat (21) des Weiteren den Schritt umfasst:
- Auftragen nanostrukturierter Materialien, die eine weite Oberfläche über den Oberflächenverstärkungsstrukturen (24A, 24B) der Anoden- und Kathodenregionen (22, 23) aufweisen.

11. Verfahren nach Anspruch 9, wobei der Schritt des Auftragens der Schicht aus Ionenaustauschmaterial (34) einen Schritt umfasst, der ausgewählt ist aus: Sprühbeschichten, Rotationsbeschichten oder Laminieren.

12. Verfahren nach Anspruch 9, wobei der Schritt des selektiven Ätzens der Schicht aus Ionenaustauschmaterial (34) einen Schritt des Trennens von Mikrokanälen (28A, 28B) des Mikrozellensystems (20) und In-Kontakt-Bringens der Anoden- und Kathodenregionen (22, 23) umfasst.

13. Verfahren nach Anspruch 7, wobei der Schritt des Auftragens des leitenden Materialfilms (30) einen Schritt des Sprühens des leitenden Materialfilms (30), vorzugsweise Gold, auf das Substrat (21) umfasst.

14. Verfahren nach Anspruch 8, wobei der Schritt des Auftragens des leitenden Materialfilms und Bilden der Spalten der Oberflächenverstärkungsstrukturen (24A, 24B) einen Schritt des Goldplattierens umfasst.

15. Verfahren nach Anspruch 6, des Weiteren umfassend einen Formungsschritt, wobei eine negative Struktur mit Hilfe einer Druckformungstechnik auf eine polymere Schicht als Substrat (21) des Mikrobrennstoffzellensystems übertragen wird, um Oberflächenverstärkungsstrukturen (24A, 24B) auszubilden, die Spalten der Anoden- und Kathodenregionen (22, 23) des Mikrobrennstoffzellensystems (20)aufweisen, wobei der Formungsschritt ferner Mikrokanäle (28A, 28B) des Mikrobrennstoffzellensystems (20) ausbildet.

## Revendications

1. Système de micropile à combustible (20) du type qui comprend au moins une région anodique (22) et une région cathodique (23) réalisées sur un substrat (21) ainsi qu'au moins une zone active (24) pour des réactions chimiques et une membrane d'échange ionique (26) permettant d'isoler ladite zone active (24), **caractérisé en ce que** lesdites régions anodique et cathodique (22, 23), ladite zone active (24) et ladite membrane d'échange ionique (26) sont réalisées sur une même surface plane formée par ledit substrat (21) dans le but de former une seule plaque bipolaire multifonctionnelle, ledit substrat (21) étant réalisé en un stratifié flexible ou rigide d'un matériau qui est utilisé pour produire des cartes de circuits imprimés, choisi de préférence parmi le silicium, le graphite, le plastique.

2. Système (20) selon la revendication 1, **caractérisé en ce que** ladite zone active (24) comprend des structures respectives d'amplification de surface (24A, 24B) ayant une configuration en colonnes en correspondance avec lesdites régions anodique et cathodique (22, 23) et étant recouvertes par une couche respective de matériau de catalyseur (25A, 25B) présentant une structure sensiblement interdigitée et étant séparées par ladite membrane d'échange ionique (26).

3. Système (20) selon la revendication 2, **caractérisé en ce que** ladite membrane d'échange ionique (26) comprend également des portions respectives (26A, 26B) recouvrant lesdites couches de matériau de catalyseur (25A, 25B) et présentant une structure interdigitée identique.

4. Système (20) selon la revendication 3, **caractérisé en ce que** lesdites régions anodique et cathodique (22, 23) sont équipées de collecteurs de courant respectifs (27A, 27B) réalisés dans ledit substrat (21), formés par un film de matériau conducteur qui est recouvert par une couche de catalyseur (25) et connectés à des structures respectives de distribution de flux, en particulier des micro-canaux (28A, 28B), qui sont réalisés sur ledit substrat (21) pour fournir séparément des flux de combustible et d'oxydant.

5. Système (20) selon la revendication 4, **caractérisé en ce qu'**il comprend en outre une couche de recouvrement desdits micro-canaux (28A, 28B) pour délimiter les flux de combustible et d'oxydant.

6. Procédé de fabrication d'un système de micropile à combustible (20) du type qui comprend au moins une région anodique (22) et une région cathodique (23) réalisées sur un substrat (21) ainsi qu'au moins une zone active (24) pour des réactions chimiques et une membrane d'échange ionique (26) permettant d'isoler ladite zone active (24), le procédé comprenant les étapes suivantes:
- réaliser ledit substrat (21) en utilisant un stratifié flexible ou rigide d'un matériau utilisé pour réaliser des cartes de circuits imprimés, choisi de préférence parmi le silicium, le graphite, le plastique; et
- réaliser lesdites régions anodique et cathodique (22, 23), ladite zone active (24) et ladite membrane d'échange ionique (26) d'une façon coplanaire sur ledit substrat (21) dans le but de former une seule plaque bipolaire multifonctionnelle.

7. Procédé selon la revendication 6, dans lequel ladite étape de réalisation desdites régions anodique et cathodique (22, 23), de ladite zone active (24) et de ladite membrane d'échange ionique (26) d'une façon coplanaire sur ledit substrat (21) comprend en plus les étapes suivantes:
- déposer sur ledit substrat (21) un film de matériau conducteur (30);
- déposer une couche d'agent photorésistant (31) sur ledit film de matériau conducteur (30); et
- effectuer une exposition à la lumière capable de séparer ledit film de matériau conducteur (30) en une première portion et une deuxième portion (30A, 30B), aptes à former des structures de germination respectives pour des structures d'amplification de surface (24A, 24B) desdites régions anodique et cathodique (22, 23) dudit système de micropile à combustible (20).

8. Procédé selon la revendication 7, dans lequel ladite étape de réalisation desdites régions anodique et cathodique (22, 23), de ladite zone active (24) et de ladite membrane d'échange ionique (26) d'une façon coplanaire sur ledit substrat (21) comprend en plus les étapes suivantes:
- graver ladite couche d'agent photorésistant (31) et exposer lesdites première et deuxième portions (30A, 30B) dudit film de matériau conducteur (30);
- déposer une autre couche d'agent photorésistant (32) recouvrant lesdites première et deuxième portions (30A, 30B) dudit film de matériau conducteur (30) et une portion dudit substrat (21) qui était restée exposée entre celles-ci;
- effectuer une exposition à la lumière apte à réaliser une multiplicité d'ouvertures (33) dans ladite autre couche d'agent photorésistant (32) en correspondance avec des colonnes de structures d'amplification de surface (24A, 24B) desdites régions anodique et cathodique (22, 23);
- déposer une couche de matériau conducteur, et former ainsi lesdites colonnes desdites structures d'amplification de surface (24A, 24B) desdites régions anodique et cathodique (22, 23); et
- graver ladite autre couche d'agent photorésistant (32) et exposer ainsi lesdites structures d'amplification de surface (24A, 24B) desdites régions anodique et cathodique (22, 23).

9. Procédé selon la revendication 8, dans lequel ladite étape de réalisation desdites régions anodique et cathodique (22, 23), de ladite zone active (24) et de ladite membrane d'échange ionique (26) d'une façon coplanaire sur ledit substrat (21) comprend en plus les étapes suivantes:
- déposer une couche de matériau de catalyseur (25) et former ainsi des structures interdigitées (25A, 25B) alternées sur lesdites structures d'amplification de surface (24A, 24B) desdites régions anodique et cathodique (22, 23);
- déposer une couche de matériau d'échange ionique (34) sur tout le système (20), et
- effectuer une gravure sélective de ladite couche de matériau d'échange ionique (34) et former ainsi ladite membrane d'échange ionique (26), ainsi que des portions (26A, 26B) recouvrant lesdites structures d'amplification de surface (24A, 24B) desdites régions anodique et cathodique (22, 23) et présentant une même structure interdigitée desdites structures interdigitées (25A, 25B).

10. Procédé selon la revendication 9, dans lequel ladite étape de réalisation desdites régions anodique et cathodique (22, 23), de ladite zone active (24) et de ladite membrane d'échange ionique (26) d'une façon coplanaire sur ledit substrat (21) comprend en plus l'étape suivante:
- déposer des matériaux nanostructurés présentant une vaste surface sur lesdites structures d'amplification de surface (24A, 24B) desdites régions anodique et cathodique (22, 23).

11. Procédé selon la revendication 9, dans lequel ladite étape de dépôt de ladite couche de matériau d'échange ionique (34) comprend une étape choisie parmi le dépôt par pulvérisation, la centrifugation ou la stratification.

12. Procédé selon la revendication 9, dans lequel ladite étape de gravure sélective de ladite couche de matériau d'échange ionique (34) comprend une étape de séparation de microcanaux (28A, 28B) dudit système de micropile (20) et de mise en contact desdites régions anodique et cathodique (22, 23).

13. Procédé selon la revendication 7, dans lequel ladite étape de dépôt dudit film de matériau conducteur (30) comprend une étape de pulvérisation dudit film de matériau conducteur (30), de préférence d'or, sur ledit substrat (21) .

14. Procédé selon la revendication 8, dans lequel ladite étape de dépôt dudit film de matériau conducteur et de formation desdites colonnes desdites structures d'amplification de surface (24A, 24B) comprend une étape de placage à l'or.

15. Procédé selon la revendication 6, comprenant en plus une étape de moulage dans laquelle une structure négative est transférée au moyen de techniques de moulage sous pression sur une couche polymère sous la forme d'un substrat (21) du système de micropile à combustible pour réaliser des structures d'amplification de surface (24A, 24B) comportant des colonnes desdites régions anodique et cathodique (22, 23) dudit système de micropile à combustible (20), ladite étape de moulage réalisant en outre des microcanaux (28A, 28B) dudit système de micropile à combustible (20).
